**Europäisches Patentamt**

**European Patent Office**

**Office européen des brevets**

(19)

(11) Veröffentlichungsnummer : **0 218 033**
**B1**

(12) **EUROPÄISCHE PATENTSCHRIFT**

(45) Veröffentlichungstag der Patentschrift :
**30.11.88**

(51) Int. Cl.⁴ : **F 16 D 55/224**

(21) Anmeldenummer : **86110775.3**

(22) Anmeldetag : **04.08.86**

(54) Scheibenbremse für Fahrzeuge.

(30) Priorität : **27.08.85 DE 3530598**

(43) Veröffentlichungstag der Anmeldung :
**15.04.87 Patentblatt 87/16**

(45) Bekanntmachung des Hinweises auf die Patenterteilung : **30.11.88 Patentblatt 88/48**

(84) Benannte Vertragsstaaten :
**BE DE FR GB IT NL SE**

(56) Entgegenhaltungen :
**EP-A- 0 173 758**
**DE-A- 2 946 336**
**DE-A- 3 413 737**
**DE-B- 1 505 491**
**GB-A- 2 128 277**

(73) Patentinhaber : **KNORR-BREMSE AG**
**Moosacher Strasse 80 Postfach 401060**
**D-8000 München 40 (DE)**

(72) Erfinder : **Bieker, Dieter**
**Fichtenstrasse 86**
**D-5630 Remscheid (DE)**
Erfinder : **Stein, Werner**
**Birkenstrasse 4**
**D-5630 Remscheid (DE)**

**Beschreibung**

Die Erfindung betrifft eine Scheibenbremse für Fahrzeuge, mit einem Zuspannorgane tragenden Schiebesattel, der eine bevorzugt in einer Richtung drehende Bremsscheibe umgreift und nahe seiner in Umfangsrichtung liegenden Enden axiale Schiebeführungen zu mit einem Bremsträger verbundenen Halterungen aufweist, sowie mit beidseitig der Bremsscheibe zwischen dieser und dem Bremssattel angeordneten Bremsbelägen.

Scheibenbremsen der vorstehend genannten Art sind bekannt (z. B. DE-A-2.946.336). Hierbei unterliegen die Sattellagerungen besonders harten Einsatzbedingungen, sie sind Schmutz, Wasser, Streusalz, hohen Temperaturen und Temperaturschwankungen, hohen Massenbeschleunigungen usw. ausgesetzt. Dabei muß die Leichtgängigkeit des Schiebesattels stets gewährleistet sein, auch dann, wenn Temperaturunterschiede zwischen dem Bremsträger und dem Bremssattel auftreten. Des weiteren muß die Sattellagerung trotz geforderter Leichtgängigkeit zumindest nahezu spielfrei bleiben, da auftretendes Spiel zum Ausschlagen der Schiebesattellagerung führen und Klappergeräusche hervorrufen würde. Schließlich dürfen auch die Fertigungstoleranzen von Ersatzteilen nicht zu Schwierigkeiten führen.

Der Erfindung liegt die Aufgabe zugrunde, eine Scheibenbremse der eingangs genannten Art mit einfachen Mitteln derart auszugestalten, daß sie den Forderungen des praktischen Betriebes, insbesondere den vorstehend erläuterten Forderungen genügt.

Diese Aufgabe wird nach der Erfindung dadurch gelöst, daß die Halterungen (6, 15) als Zwischenteile zwischen dem Bremsträger (3) und den Schiebeführungen (8, 14) ausgebildet sind und daß die bremsscheibeneinlaufseitige Halterung starr und die bremsscheibenauslaufseitige Halterung begrenzt beweglich mit dem Bremsträger verbunden ist. Hierdurch ergibt sich eine eindeutige und sichere Ableitung der durch die Bremsmomente bewirkten Kräfte durch die bremsscheibeneinlaufseitige Halterung, wobei zugleich die bremsscheibenauslaufseitige Halterung eine verklemmungsfreie Führung gewährleistet.

Die nach der weiteren Erfindung vorteilhafte, weitere Ausgestaltung der Scheibenbremse ist den Unteransprüchen entnehmbar.

In der Zeichnung ist als Ausführungsbeispiel für die Erfindung eine Scheibenbremse dargestellt und zwar zeigt

Figur 1 eine teilweise aufgeschnittene Scheibenbremse in Ansicht,

Figur 2 eine teilweise aufgeschnittene Stirnansicht der Scheibenbremse in Pfeilrichtung X,

Figur 3 eine Einzelheit Z aus Fig. 2 in vergrößertem Maßstab und

Figur 4 eine Stirnansicht der Scheibenbremse in Pfeilrichtung Y.

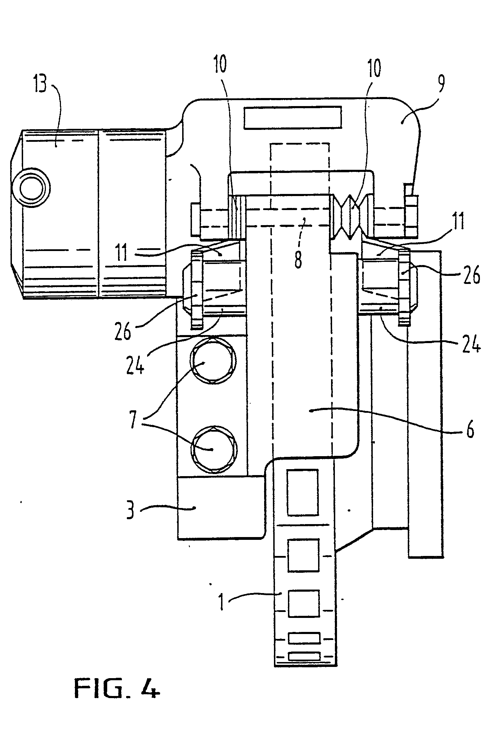

Die Scheibenbremse weist eine Bremsscheibe 1 auf, welche bevorzugt in Pfeilrichtung 2 rotiert ; die Scheibenbremse ist damit insbesondere für Straßenfahrzeuge bzw. Straßennutzfahrzeuge wie Omnibusse und Lastwagen geeignet. Gleichachsig zur Bremsscheibe 1 ist ein feststehender Bremsträger 3 mit beidseitig auskragenden Armansätzen 4 bzw. 5 vorgesehen. Mit der Stirnseite des Armansatzes 4 ist eine Halterung 6 mittels zweier Schrauben 7 starr verschraubt. Die Halterung 6 umgreift, wie insbesondere aus Fig. 4 ersichtlich ist, die Bremsscheibe 1 etwa sattelartig. Am zur Befestigung am Bremsträger 3 entgegengesetzten Ende ist an der Halterung 6 dicht außerhalb des Außenumfanges der Bremsscheibe 1 eine Bolzenführung 8 für einen Schiebesattel 9 angeordnet, wobei zum Verschmutzungs- und Korrosionsschutz der Bolzenführung 8 beidseitig des Schiebesattels 9 sich von letzterem zur Halterung 6 erstreckende Faltenbälge 10 vorgesehen sind. Die Bolzenführung 8 ist zumindest nahezu spielfrei ausgeführt.

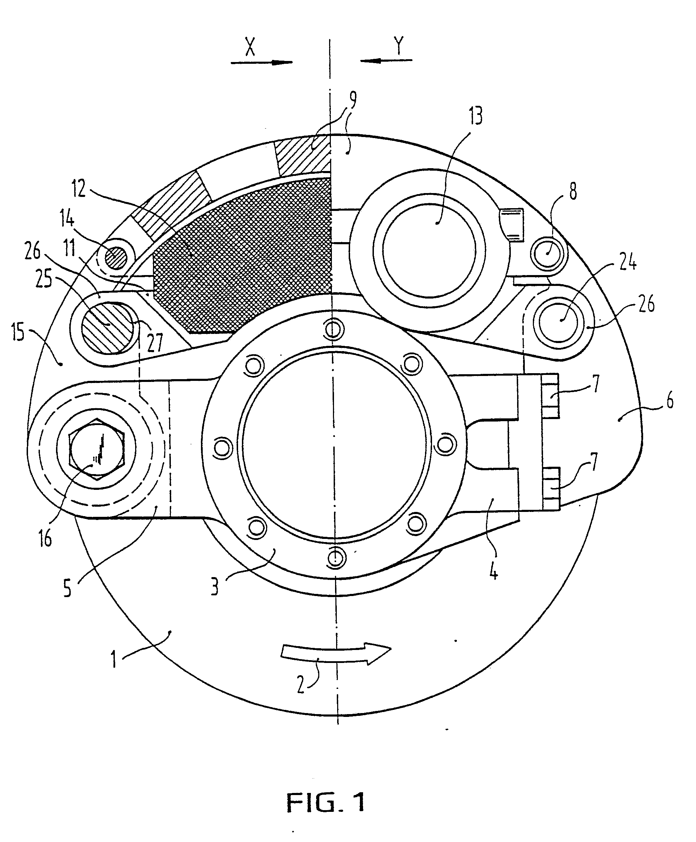

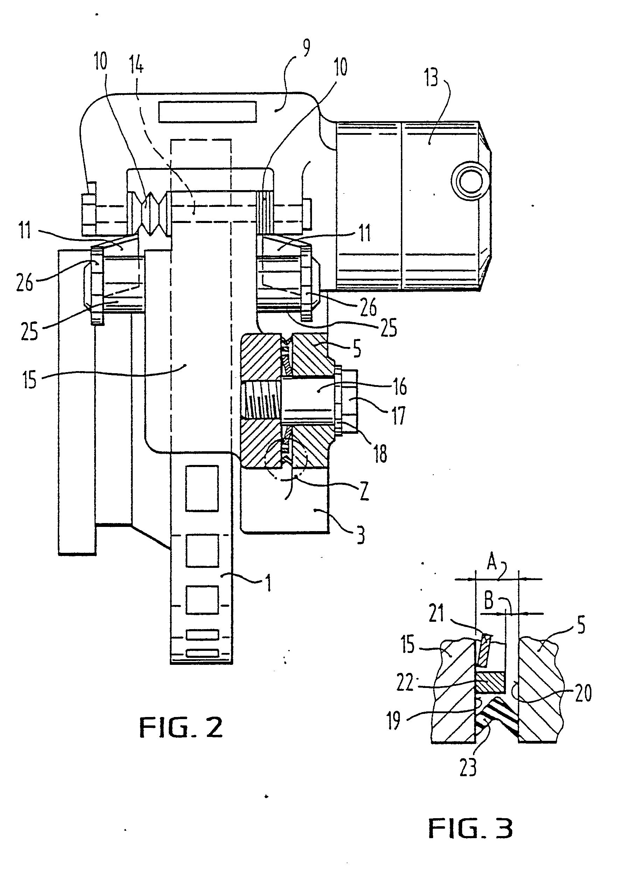

Der Schiebesattel 9 umgreift die Bremsscheibe 1, zwischen ihm und der Bremsscheibe 1 sind beidseitig zu letzterer auf Belagträgerblechen 11 gehaltene Bremsbeläge 12 vorgesehen. Einseitig trägt der Schiebesattel 9 an einem seiner Schenkel zwei hydraulische Zuspannzylinder 13, von welchen in Fig. 1 lediglich einer sichtbar ist. Das andersseitige Ende des Schiebesattels 9 ist mittels einer weiteren Bolzenführung 14 mit zur Bolzenführung 8 gleicher Ausbildung an einer zweiten Halterung 15 geführt. Die Halterungen 6 und 15 sind derart angeordnet, daß sich die Halterung 6 bei in Pfeilrichtung 2 rotierender Bremsscheibe 1 einlaufseitig und die Halterung 15 auslaufseitig zum Bremssattel 9 befindet. Gegenüberliegend zur Bolzenführung 14 ist die Halterung 15 mit einem zur Achse der Bremsscheibe 1 gleichachsigen Führungsbolzen 16 versehen, wie es insbesondere aus Fig. 2 ersichtlich ist. Der Führungsbolzen 16 durchgreift mit geringem Spiel eine Bohrung im Armansatz 5 und endet mit einem die erwähnte Bohrung übergreifenden Schraubenkopf 17, wobei zwischen letzteren und den Armansatz 5 eine Scheibe 18 eingelegt ist. Die einander zugewandten Flächen 19 bzw. 20 der Halterung 15 und des Armansatzes 5 stehen einander mit beachtlichem Abstand A gegenüber, wie es insbesondere aus Fig. 3 ersichtlich ist. Innerhalb des Abstandes A befindet sich eine als elastisches und dämpfendes Verspannmittel dienende Tellerfeder 21, welche den Führungsbolzen 16 umgibt und welche die Flächen 19 und 20 auseinanderzuspreizen sucht. Die Tellerfeder 21 ist von einem Abstandsring 22 umgeben. Der Abstandsring 22 kann an der Fläche 19 der Halterung 15 gehalten sein, er weist dabei einen zum Abstand A geringen Abstand B zur Fläche 20 des Armansatzes 5 auf. Die Halterung 15 ist damit mittels des Führungsbolzens 16 um den Abstand B axialverschieblich und um höchstens geringe Winkelbeträge kippbar, jedoch um die Achse des Führungsbolzens 16 drehbar am Armansatz 5 gehaltert. Um den Zwischenraum zwischen den Flächen 19 und 20 vor dem Eindringen von Fremdkörpern zu schützen, ist der Abstandsring 22 von einem im Querschnitt etwa V-förmigen Dichtring 23 umgeben, der den Abstand A überbrückt und mit elastischer Vorspannung an den beiden Flächen 19 und 20 anliegt.

Die beiden Halterungen 6 und 15 weisen zwischen ihren Halterungsstellen am Bremsträger 3 und den Bolzenführungen 8 bzw. 14 etwa im Bereich des Außenumfanges der Bremsscheibe 1 beidseitig jeweils einen nach außen auskragenden Bolzen 24 bzw. 25 auf. Die Belagträgerbleche 11 sind an ihren die Bremsbeläge 12 überragenden Enden jeweils mit einer Abkröpfung 26 versehen, welche von der Bremsscheibe 1 weggerichtet ist. Die bremsscheibeneinlaufseitigen Abkröpfungen 26 sind mit von den Bolzen 24 zumindest nahezu spielfrei durchgriffenen Bohrungen versehen. Die andersseitigen, bremsscheibenauslaufseitigen Abkröpfungen 26 weisen dagegen ein Langloch 27 auf, in welchen die Bolzen 25 in Querrichtung ebenfalls zumindest nahezu spielfrei geführt sind. Die Längsrichtung des Langloches 27 verläuft im Winkel zur Außenumfangsrichtung der Bremsscheibe 1 im Bereich der Bolzen 25, zweckmäßig verläuft die Längsrichtung der Langlöcher 27 etwa in Richtung zu den Bolzen 24.

Die beiden Bolzenführungen 8 und 14 sichern eine stets verklemmungsfreie, verschmutzungsgeschützte Verschieblichkeit des Schiebesattels relativ zu den Halterungen 6 und 15, wobei Toleranzen bzw. Wärmedehnungen des Bremssattels 9 oder gegebenenfalls auch anderer Bauteile durch entsprechende Bewegung der Halterung 15 relativ zum Bremsträger 3 ohne Beeinträchtigung der Schiebeführung aufgenommen werden. Die am Schiebesattel 9 während Bremsungen auftretenden Kräfte werden über die Bolzenführung 8 und die Halterung 6 auf den Bremsträger 3 übertragen, während die Halterung 15 den Bremssattel 9 im wesentlichen lediglich in seiner Sollage führt. Die während Bremsungen aus den Bremsmomenten resultierenden Kräfte belasten nicht den Schiebesattel 9, sondern werden bereits von den Belagträgerblechen 11 bremsscheibeneinlaufseitig auf die Bolzen 24 übertragen und werden somit über die Halterung 6 auf den Bremsträger 3 abgeführt. Mittels der Langlöcher 27 werden die Belagträgerbleche 11 dabei im wesentlichen in ihrer Sollage geführt, über die Bolzen 25 werden nur geringe, aus Drehmomenten der Bremsbeläge 12 um deren Reibungsmittelpunkte resultierende Kräfte abgestützt. Infolge der Langlöcher 27 werden Toleranzabweichungen und Wärmedehnungen, insbesondere der Belagträgerbleche 11, verspannungsfrei ausgeglichen, so daß diese keine Verklemmungen der Belagträgerführungen bewirken können, die Belagträgerbleche also stets beweglich parallel zur Bremsscheibenachse geführt sind.

Ein besonderer Vorteil der vorstehend beschriebenen Scheibenbremse ist des weiteren darin zu sehen, daß verschlissene Einzelteile, insbesondere die Bolzenführugen 8, 14 oder auch Bolzen 24, 25, erforderlichenfalls auch der Schiebesattel 9, die Halterungen 6, 15 und selbstverständlich auch die Bremsbeläge 12 mit ihren Bremsbelagträgerblechen 11 einfach auswechsel- und ersetzbar sind, wobei die Demontage- und Montagearbeiten sehr gering gehalten werden können.

Anstelle der im vorstehend beschriebenen Ausführungsbeispiel gezeigten, versetzten Führungen für Schiebesattel 9 und Bremsbelagträgerbleche 11 können diese Führungen auch zueinander gleichachsig angeordnet werden.

**Patentansprüche**

1. Scheibenbremse für Fahrzeuge, mit einem Zuspannorgane (13) tragenden Schiebesattel (9), der eine bevorzugt in einer Richtung (Pfeilrichtung 2) drehende Bremsscheibe (1) umgreift und nahe seiner in Umfangsrichtung liegenden Enden axiale Schiebeführungen (Bolzenführungen 8,14) zu mit einem Bremsträger (3) verbundenen Halterungen (6, 15) aufweist, sowie mit beidseitig der Bremsscheibe (1) zwischen dieser und dem Bremssattel (9) angeordneten Bremsbelägen (12), dadurch gekennzeichnet, daß die Halterungen (6, 15) als Zwischenteile zwischen dem Bremsträger (3) und den Schiebeführungen (8, 14) ausgebildet sind und daß die bremsscheibeneinlaufseitige Halterung (6) starr und die bremsscheibenauslaufseitige Halterung (15) begrenzt beweglich mit dem Bremsträger (3) verbunden ist.

2. Scheibenbremse nach Anspruch 1, dadurch gekennzeichnet, daß die bremsscheibenauslaufseitige Halterung (15) mittels eines zur Bremsscheibenachse parallelen Bolzens (16) am Bremsträger (3) gehalten ist.

3. Scheibenbremse nach Anspruch 2, dadurch gekennzeichnet, daß zwischen dem Bremsträger (3) und der Halterung (15) in Achsrichtung des Bolzens (16) elastische und dämpfende Verspannmittel eingeordnet sind.

4. Scheibenbremse nach Anspruch 3, dadurch gekennzeichnet, daß zwischen den einander zugewandten Stirnflächen (19, 20) des Bremsträgers (3) und der Halterung (15) ein deren Abstand (A) bis auf einen Spielabstand (B) überbrückender Abstandsring (22), eine Tellerfeder (21) und ein beide umgebender Dichtring (23) eingeordnet sind.

5. Scheibenbremse nach einem oder mehreren der vorstehenden Ansprüche, dadurch gekennzeichnet, daß die bremsscheibeneinlaufseitige Halterung (6) durch zumindest zwei Schrauben (7) fest mit dem Bremsträger (3) verbunden ist.

6. Scheibenbremse nach einem oder mehreren der vorstehenden Ansprüche, dadurch gekennzeichnet, daß die Halterungen (6, 15) die Bremsscheibe (1) sattelartig umgreifen.

7. Scheibenbremse nach einem oder mehreren der vorstehenden Ansprüche, dadurch gekennzeichnet, daß den Bremsbelägen (12) zugehörende Belagträgerbleche (11) beiseitig an den Halterungen (6, 15) geführt sind.

8. Scheibenbremse nach Anspruch 7, dadurch gekennzeichnet, daß die Belagträgerbleche (11) an der bremsscheibeneinlaufseitigen Halterung (6) mittels einer weitgehend spielfreien Bolzenlagerung (Bolzen 24) drehbar gehalten und an der andersseitigen Halterung mittels einer im Winkel zur dortigen Bremsscheiben-Umfangsrichtung verlaufenden Gleitsteinführung geführt ist.

9. Scheibenbremse nach Anspruch 8, dadurch gekennzeichnet, daß die Gleitsteinführung eine ein Langloch (27) aufweisende Bolzenlagerung (Bolzen 25) ist, wobei das Langloch (27) sich im Winkel zur dortigen Bremsscheiben-Umfangsrichtung, gegebenenfalls etwa in Richtung einer zur andersseitigen Bolzenlagerung (Bolzen 24) verlaufenden Geraden, erstreckt.

10. Scheibenbremse nach den Ansprüchen 6 bis 9, dadurch gekennzeichnet, daß die Halterungen (6, 15) etwa im Bereich des Außenumfanges der Bremsscheibe (1) beidseitig je einen parallel zur Bremsscheibenachse seitlich auskragenden Bolzen (24, 25) für die Bolzenlagerungen aufweisen.

11. Scheibenbremse nach Anspruch 10, dadurch gekennzeichnet, daß in Ansicht gesehen die Bolzen (24, 25) an den Halterungen (6, 15) zwischen den Schiebeführungen des Schiebesattels (9) zugehörenden Bolzenführungen (8, 14) und den Befestigungsstellen der Halterungen (6, 15) am Bremsträger (3) angeordnet sind.

## Claims

1. Disc brake for vehicles having a sliding caliper (9) carrying clamping members (13), the caliper embracing a brake disc (1) rotating preferably in one direction (arrow direction 2) and having near its ends situated in the circumferential direction guide means (pin guide means 8, 14) axially slidable to mounting means (6, 15) connected to a brake carrier (3), and having brake linings (12) on both sides of the brake disc (1) arranged between it and the brake caliper (9), characterised in that the mounting means (6, 15) are formed as intermediate parts between the brake carrier (3) and the sliding guide means (8, 14) and in that the mounting means (6) on the entry side of the brake disc is rigidly connected to the brake carrier (3), and the mounting means (15) on the exit side of the brake disc is, within limits, movably connected to the brake carrier (3).

2. Disc brake according to claim 1, characterised in that the mounting means (15) on the exit side of the brake disc is retained on the brake carrier (3) by means of a pin (16) parallel to the brake disc axis.

3. Disc brake according to claim 2, characterised in that elastic and damping stressing means are inserted between the brake carrier (3) and the mounting means (15) in the axial direction of the pin (16).

4. Disc brake according to claim 3, characterised in that between the facing ends (19, 20) of the brake carrier (3) and the mounting means (15) there are inserted a spacer ring (22) bridging the clearance (A) between them except for a clearance distance (B), a plate spring (21) and a sealing ring (23) surrounding both.

5. Disc brake according to one or more of the preceding claims, characterised in that the mounting means (6) on the entry side of the brake disc is firmly connected to the brake carrier (3) by means of at least two screws (7).

6. Disc brake according to one or more of the preceding claims, characterised in that the mounting means (6, 15) engage like a caliper round the brake disc (1).

7. Disc brake according to one or more of the preceding claims, characterised in that lining carrier plates (11) belonging to the brake linings (12) are located on both sides on the mounting means (6, 15).

8. Disc brake according to claim 7, characterised in that the lining carrier plates (11) are rotatably mounted on the mounting means (6) on the entry side of the brake disc by means of a substantially clearance-free pin bearing (pin 24) and are located on the mounting means on the other side by means of a slide abutment guide means extending at an angle to the brake disc circumferential direction at that point.

9. Disc brake according to claim 8, characterised in that the slide abutment guide means is a pin bearing (pin 25) having an elongate aperture (27), this elongate aperture (27) extending at an angle to the brake disc circumferential direction at that point, possibly approximately in the direction of a straight line extending to the pin bearing (pin 24) on the other side.

10. Disc brake according to claims 6 to 9, characterised in that approximately in the area of the outer circumference of the brake disc (1) the mounting means (6, 15) have on both sides a pin (24, 25) for the pin bearings projecting laterally and parallel to the brake disc axis.

11. Disc brake according to claim 10, characterised in that, seen in elevation, the pins (24, 25) are arranged on the mounting means (6, 15) between pin guide means (8, 14) belonging to the sliding guide means of the sliding caliper (9) and the securing points of the mounting means (6, 15) on the brake carrier (3).

## Revendications

1. Frein à disque pour des véhicules, comportant un étrier coulissant (9) qui porte des organes de serrage (13), qui entoure un disque de frein tournant de préférence dans un sens (sens de la flèche 2) et qui comporte, près de ses extrémités qui se situent dans le sens périphérique, des guidages coulissants axiaux (guidages de boulons 8, 14) pour des supports (6, 15) reliés à un support de frein (3), ainsi que des garnitures de frein (12), de part et d'autre du disque de frein (1) et entre ce dernier et l'étrier de frein (9), caractérisé par le fait que les supports (6, 15) sont réalisés sous la forme d'éléments intermédiaires entre le support de frein (3) et les guidages coulissants (8, 14) et que le support (6), situé du côté entrée du disque de frein, est relié rigidement avec le support de frein (3), alors que le support (5), situé du côté sortie du disque de frein est relié au support de frein (3) avec une mobilité limitée.

2. Frein à disque selon la revendication 1, caractérisé par le fait que le support (15) situé du côté sortie du disque de frein est porté par le support de frein (3) à l'aide d'un boulon (16) parallèle à l'axe du disque de frein.

3. Frein à disque selon la revendication 2, caractérisé par le fait qu'entre le support de frein (3) et le support (15) sont disposés, en direction axiale du boulon (16), des moyens de serrage élastique et à amortissement.

4. Frein à disque selon la revendication 3, caractérisé par le fait qu'entre les surfaces frontales (19, 20) du support de frein (3), qui sont situées l'une en face de l'autre et le support (15), sont prévues une bague-entretoise (22) qui comble leur écartement (A), à un jeu (B) près, une rondelle-ressort (21) et une bague d'étanchéité (23) entourant les deux surfaces.

5. Frein à disque selon une ou plusieurs des revendications précédentes, caractérisé par le fait que le support (6) situé du côté entrée du disque de frein est relié de façon fixe au support de frein (3) à l'aide d'au moins deux vis (7).

6. Frein à disque selon une ou plusieurs des revendications précédentes, caractérisé par le fait que les supports (6,15) entourent le disque de frein (1) à la manière d'un étrier.

7. Frein à disque selon une ou plusieurs des revendications précédentes, caractérisé par le fait que des tôles de support de garniture (11), appartenant aux garnitures de frein (12) sont guidées des deux côtés sur les supports (6, 15).

8. Frein à disque selon la revendication 7, caractérisé par le fait que les tôles de garnitures de frein (11) sont portées à rotation sur le support (6) situé du côté entrée du disque de frein à l'aide d'un montage à boulons (boulon 24) largement dépourvu de jeu et elles sont guidées de l'autre côté du support à l'aide d'un guidage de coulisseau qui s'étend angulairement par rapport au sens périphérique du disque de frein qui y prévient.

9. Frein à disque selon la revendication 8, caractérisé par le fait que le guidage de coulisseau est un montage à boulon (boulon 25) comportant une boutonnière (27), celle-ci s'étendant suivant un angle pour le sens périphérique, qui y prévient, pour le disque de frein, éventuellement suivant sensiblement une droite qui s'étend vers le montage à boulons (boulon 24), situé de l'autre côté.

10. Frein à disque selon les revendications 6 à 9, caractérisé par le fait que les supports (6,15) comportent, à peu près dans la zone de la périphérie extérieure du disque de frein (1) et sur chaque côté un boulon (24, 25) pour les montages à boulons, qui s'étend latéralement et axialement par rapport à l'axe du disque de frein.

11. Frein à disque selon la revendication 10, caractérisé par le fait que, vus en élévation, les boulons (24, 25) prévus sur les supports (6, 15) sont disposés entre les guidages des boulons (8, 14) appartenant aux guidages coulissants de l'étrier coulissant (9) et des points de fixation des supports (6, 15) prévus sur le support de frein (3).

FIG. 1

## 0 218 033

FIG. 2

FIG. 3

2

FIG. 4